Europäisches Patentamt

European Patent Office

Office européen des brevets

(11) Veröffentlichungsnummer: **0 399 150**
**A1**

# EUROPÄISCHE PATENTANMELDUNG

(21) Anmeldenummer: **90103660.8**

(22) Anmeldetag: **26.02.90**

(51) Int. Cl.⁵: **A47J 31/043, H05B 6/80**

(30) Priorität: **20.05.89 DE 3916457**
**11.01.90 DE 4000634**

(43) Veröffentlichungstag der Anmeldung:
**28.11.90 Patentblatt 90/48**

(84) Benannte Vertragsstaaten:
**AT BE CH DE DK ES FR GB GR IT LI LU NL SE**

(71) Anmelder: **Melitta-Werke Bentz & Sohn**
**Ringstrasse 99**
**D-4950 Minden 1(DE)**

(72) Erfinder: **Creyaufmüller, Peter**
**Bliefterningweg 6a**
**D-4950 Minden(DE)**

(74) Vertreter: **Stracke, Alexander, Dipl.-Ing. et al**
**Jöllenbecker Strasse 164**
**D-4800 Bielefeld 1(DE)**

(54) **Vorrichtung zur Zubereitung von Heissgetränken in einem Mikrowellenofen.**

(57) Vorrichtung zur Zubereitung von Heißgetränken mittels eines Mikrowellenofens, die einen unteren Aufnahmebehälter (10) für das fertige Heißgetränk und einen darauf aufsetzbaren Frischwasserbehälter (13) beinhaltet, wobei der Frischwasserbehälter einen Boden (14) aufweist und mit einem saugheber-ähnlichen Überlaufrohr (15) ausgerüstet ist. Die Ausgangsöffnung (16) des Überlaufrohres (15) liegt im Inneren des Frischwasserbehälters (13). Die Auslauföffnung (17) durchtritt den Boden (14) des Frischwasserbehälters (13). Die Auslauföffnung (17) des Überlaufrohres (15) mündet in einen über den Boden (14) nach unten vorstehenden Anschlußstutzen (19) ein.

Der Frischwasserbehälter (13) ist luftdicht abgeschlossen, der Aufnahmebehälter (10) hingegen be- und entlüftbar. Im Frischwasserbehälter (13) befindliches Wasser wird im Mikrowellenofen erhitzt, hierbei entsteht im Frischwasserbehälter (13) ein Überdruck, der das erhitzte Wasser durch das Überlaufrohr (15) aus dem Frischwasserbehälter (13) herausdrückt.

Eine Umkehr dieses Funktionsprinzipes ist dadurch möglich, daß der Frischwasserbehälter (13) belüftbar gestaltet und der Aufnahmebehälter (10) ausschließlich entlüftbar gestaltet wird, so daß im Aufnahmebehälter (10) ein Teilvakuum erzeugt werden kann, dessen Unterdruck gegenüber dem Frischwasserbehälter (13) ein Absaugen des erhitzten Frischwassers bewirkt.

Fig. 1

## Vorrichtung zur Zubereitung von Heißgetränken in einem Mikrowellenofen

Die vorliegende Erfindung betrifft eine Vorrichtung zur Zubereitung von Heißgetränken in einem Mikrowellenofen mit einem unteren Aufnahmebehälter für das fertige Heißgetränk sowie einem auf den Aufnahmebehälter aufsetzbaren Frischwasserbehälter mit einem Boden und einem Absperrorgan, dessen Ausgangsöffnung im Inneren des Frischwasserbehälters liegt und dessen Auslauföffnung den Boden des Frischwasserbehälters durchtritt.

Eine Vorrichtung der gattungsgemäßen Art ist aus der DE 28 29 567 A1 bekannt.

Bei der dort beschriebenen Vorrichtung besteht das Absperrorgan aus einem Bimetall-betätigten Ventil.

Dies bedeutet, daß das Absperrorgan bewegliche Teile aufweist und daß die Öffnung oder die Freigabe der Auslauföffnung abhängig ist vom Ansprechverhalten des Bimetalles zur Betätigung des Ventiles.

Der vorliegenden Erfindung liegt die Aufgabe zugrunde, eine Vorrichtung der gattungsgemäßen Art zu schaffen, die sich durch einen einfachen, störunanfälligen Aufbau sowie dadurch auszeichnet, daß ein Aromaträger ausschließlich mit ausreichend erhitztem Wasser in Berührung kommt.

Eine Lösung dieser Aufgabe besteht darin, daß das Absperrorgan aus einem saugheberähnlichen Überlaufrohr besteht, daß der Frischwasserbehälter luftdicht abgeschlossen und der Aufnahmebehälter be- und entlüftbar ist.

Eine andere Lösung dieser Aufgabe besteht darin, daß das Absperrorgan aus einem saugheberähnlichen Überlaufrohr besteht, daß im Boden des belüftbaren Frischwasserbehälters außerhalb des Bereiches der Auslauföffnung des Überlaufrohres mindestens eine Tropföffnung vorgesehen und der Aufnahmebehälter im Auflagebereich des Frischwasserbehälters bis auf mindestens ein im Bereich seines oberen Randes vorgesehenes, einseitig wirkendes Entlüftungsventil luftdicht verschlossen ist.

Bei beiden Lösungen weist das Absperrorgan keinerlei beweglichen Teile auf, so daß in beiden Fällen ein einfacher und störunanfälliger Aufbau der Vorrichtung gegeben ist.

Bei der erstgenannten Lösung wird das im Frischwasserbehälter befindliche Wasser, nachdem die gesamte Vorrichtung in einen Mikrowellenofen gegeben und der Mikrowellenofen eingeschaltet wurde, erhitzt. Dabei bildet sich im luftdicht abgeschlossenen Frischwasserbehälter ein Über druck, durch den das erhitzte Wasser durch das saugheberähnliche Überlaufrohr aus dem Frischwasserbehälter herausgedrückt wird. Der Mikrowellenofen bleibt solange eingeschaltet, wie dies für die Erzeugung von Wasserdampf im luftdicht abgeschlossenen Frischwasserbehälter erforderlich ist, d.h. , bis der Frischwasserbehälter praktisch vollständig entleert ist. Der Frischwasserbehälter ist in diesem Zustand nahezu vollständig mit Wasserdampf ausgefüllt. Nach dem Abschalten des Mikrowellenofens kühlt sich dann der Wasserdmapf ab und kondensiert, so daß nun im Frischwasserbehälter ein Unterdruck entsteht. Dieser Unterdruck führt nun zum Einsaugen von Luft in den Frischwasserbehälter durch das saugheberähnliche Überlaufrohr, was deshalb ohne weiteres möglich ist, weil in diesem Zustand kein Wasser mehr durch dieses Überlaufrohr gefördert wird und dieses Überlaufrohr insofern dann als Belüftungsrohr für den Frischwasserbehälter genutzt werden kann. Die Luftansaugung in den Frischwasserbehälter ist deshalb ohne weiteres möglich, weil der unter dem Frischwasserbehälter angeordnete Aufnahmebehälter sowohl be- wie auch entlüftbar ist.

Beim zweiten Lösungsvorschlag ergibt sich ein anderes Wirkungsprinzip. Wird eine derartige Vorrichtung, nach dem in den Frischwasserbehälter Wasser eingefüllt worden ist, in einen Mikrowellenofen gegeben und dieser eingeschaltet, so wird einerseits das im Frischwasserbehälter befindliche Wasser erhitzt und andererseits wird die im Aufnahmebehälter befindliche Luft erwärmt und darüber hinaus durch die Trotzöffnung in den Aufnahmebehälter gelangendes Wasser verdampft. Hierdurch wird Luft aus dem Aufnahmebehälter infolge des sich einstellenden höheren Druckes entweichen. Wird nach ausreichender Erhitzung des im Frischwasserbehälter befindlichen Wassers der Mikrowellenofen ausgeschaltet, so kühlt sich insbesondere der im Aufnahmebehälter befindliche Wasserdampf sehr rasch ab und kondensiert. Hierdurch entsteht im Aufnahmebehälter ein Teilvakuum, da durch das einseitig wirkende Entlüftungsventil ein Einströmen von Luft in den Aufnahmebehälter nicht möglich ist. Dieses Teilvakuum erzeugt gegenüber dem Frischwasserbehälter einen Unterdruck, der wiederum das Absaugen des im Frischwasserbehälter befindlichen erhitzten Wassers in den Aufnahmebehälter bewirkt. Es ist lediglich sicherzustellen, daß das Teilvakuum ausreichend ist, um eine vollständige Absaugung des erhitzten Frischwassers aus dem Frischwasserbehälter zu gewährleisten. Voraussetzung hierfür ist eine entsprechend große Dimensionierung des Aufnahmebehälters und kann ohne weiteres durch einfache Versuche ermittelt werden.

Weitere Merkmale der Erfindung sind Gegenstand von Unteransprüchen.

Ausführungsbeispiele der Erfindung sind in den beigefügten Zeichnungen dargestellt und werden im folgenden näher beschrieben. Es zeigen:

Fig. 1 einen Vertikalschnitt durch eine erfindungsgemäße Vorrichtung zur Zubereitung von Heißgetränken in einem Mikrowellenofen

Fig. 2 einen Vertikalschnitt durch eine Vorrichtung nach einem weiteren Ausführungsbeispiel der Erfindung

Fig. 3 ein weiteres Ausführungsbeispiel einer erfindungsgemäßen Vorrichtung im Vertikalschnitt.

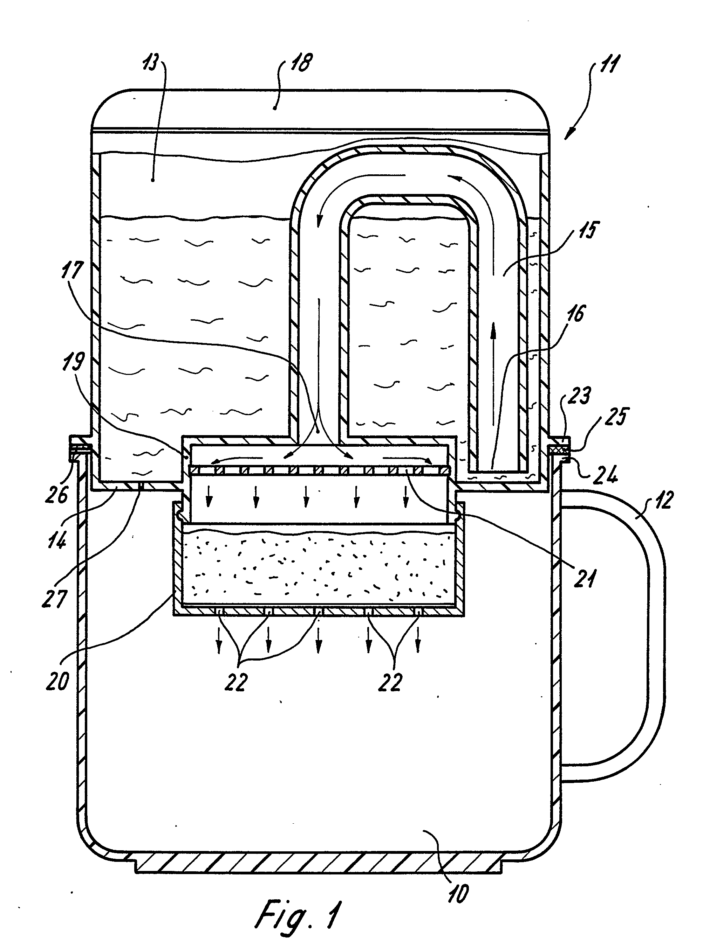

In Fig. 1 ist mit dem Bezugszeichen 10 ein unterer Aufnahmebehälter einer insgesamt mit dem Bezugszeichen 11 versehenen Vorrichtung zur Zubereitung von Heißgetränken in einem Mikrowellenofen bezeichnet. Dieser Aufnahmebehälter 10 dient zur Aufnahme für ein fertiges Heißgetränk und kann vorteilhafterweise kannenförmig ausgebildet und mit einem Handgriff 12 versehen sein.

Auf diesen Aufnahmebehälter 10 ist ein Frischwasserbehälter 13 mit einem Boden 14 formschlüssig aufgesetzt.

Der Frischwasserbehälter 13 ist mit einem saugheberähnlichen Überlaufrohr 15 ausgestattet, dessen Ausgangsöffnung 16 im Inneren des Frischwasserbehälters 13 liegt und dessen Auslauföffnung 17 den Boden 14 des Frischwasserbehälters 13 durchtritt. Oberseitig ist auf den Frischwasserbehälter 13 ein abnehmbarer Deckel 18 aufgesetzt.

Der Frischwasserbehälter 13 ist belüftbar, was beispielsweise dadurch erreicht werden kann, daß im Deckel 18 eine Belüftungsöffnung vorgesehen ist oder der Deckel 18 derart auf den Frischwasserbehälter 13 aufgesetzt ist, daß ein Lufteintritt in den Frischwasserbehälter 13 möglich ist.

Bei dem in Fig. 1 dargestellten Ausführungsbeispiel mündet die Auslauföffnung 17 des Überlaufrohres 15 in einen Anschlußstutzen 19, welcher über den Boden 14 des Frischwasserbehälters 13 nach unten hinaus vorsteht. An dem über den Boden 14 hinaus vorstehenden Bereich des Anschlußstutzens 19 ist eine Filterkammer 20 lösbar befestigt, beispielsweise über einen Bajonett- oder einem Gewindeanschluß.

Zwischen der Auslauföffnung 17 und der Filterkammer 20 ist noch im Bereich des Anschlußstutzens 19 ein Wasserverteilungssieb 21 angeordnet.

Der Boden der Filterkammer 20 ist mit einer Vielzahl von Auslauföffnungen 22 versehen.

Der Frischwasserbehälter 13 liegt mit einem umlaufenden Flansch auf dem oberen Rand 24 des Aufnahmebehälters 10 auf, vorzugsweise unter Zwischenlage einer umlaufenden Dichtung 25. In diesem Auflagebereich des Frischwasserbehälters 13 auf dem Aufnahmebehälter 10 ist mindestens eine Entlüftungsöffnung 26 in Form eines einseitig wirkenden Entlüftungsventiles vorgesehen, durch die zwar Luft aus dem Aufnahmebehälter 10 nach außen entweichen kann, hingegen keine Luft in den Aufnahmebehälter 10 eindringen kann, solange der Frischwasserbehälter 13 auf den Aufnahmebehälter 10 aufgesetzt ist.

Der Boden 14 des Frischwasserbehälters 13 ist außerhalb des Bereiches der Auslauföffnung 17 des saugheberähnlichen Überlaufrohres 15 und außerhalb des Bereiches des Anschlußstutzens 19 mit mindestens einer im Durchmesser sehr klein gehaltenen Tropföffnung 27 ausgestattet.

Die Funktion der Vorrichtung 11 gemäß Fig. 1 wird nun im folgenden ausführlich beschrieben:

Der Frischwasserbehälter 13 wird mit einer gewünschten Menge von Frischwasser gefüllt. Die Filterkammer 20 wird mit einem Aromaträger, beispielsweise Kaffee oder Tee, gefüllt. Selbstverständlich kann in die Filterkammer 20 ein Papierfilter eingelegt werden. Die Filterkammer 20 wird dann am Anschlußstutzen 19 befestigt und der Frischwasserbehälter 13 auf den Aufnahmebehälter 10 aufgesetzt. Die gesamte Vorrichtung 11 wird dann in einen Mikrowellenofen gegeben. Nach Einschalten des Mikrowellenofens erhitzt sich das Wasser im Frischwasserbehälter 13. Gleichzeitig wird die Luft im Aufnahmebehälter 10 erwärmt und dehnt sich dabei aus. Die Erwärmung der Luft ergibt sich insbesondere durch die Strahlungswärme, die von den Behälterwandungen abgegeben wird. Durch die Tropföffnung 27 wird während des Erhitzungsvorganges des Frischwassers eine äußerst kleine Wassermenge in den Aufnahmebehälter 10 tropfen, diese Wassermenge verdampft unter Wirkung der Mikrowellen. Dies bedeutet in Verbindung mit der Erwärmung der Luft, daß ein Teil der im Aufnahmebehälter 10 befindlichen Luft über die Entlüftungsöffnung 26 aus dem Aufnahmebehälter 10 entweichen kann.

Die Einschaltdauer des Mikrowellenofens wird so gewählt, daß das Wasser im Frischwasserbehälter 13 zum Kochen gebracht wird. Nachdem der Mikrowellenofen abgeschaltet ist, entsteht durch die hiermit einhergehende Abkühlung im Aufnahmebehälter 10, insbesondere durch die Kondensation des hierin befindlichen Wasserdampfes, ein Teilvakuum, so daß im Aufnahmebehälter 10 gegenüber dem Frischwasserbehälter 13 ein Unterdruck entsteht. Durch diesen Unterdruck wird das erhitzte Wasser aus dem Frischwasserbehälter 13 über den höchsten Punkt des Überlaufrohres 15 angesaugt und kann dann in den Anschlußstutzen 19 sowie in die Filterkammer 20 einfließen. Das Wasserverteilungssieb 21 sorgt dabei dafür, daß eine gleichmäßige Heißwasserverteilung über dem in der Filterkammer 20 bevorrateten Aromaträger eintritt. Unter Auslaugung des Aromaträgers fließt dann das erhitzte Wasser als Heißgetränk in den Aufnahmebehälter 10. Durch das saugheberähnliche Überlaufrohr 15 findet eine nahezu vollständige Entleerung des im Frischwasserbehälter 13 befindlichen heißen Wassers statt, wobei dieses heiße Wasser durch die Wirkung des im Aufnahmebehälter 10 erzeugten Unterdruckes aus dem Frischwasserbehälter 13 abgesaugt wird.

Das im Aufnahmebehälter 10 gesammelte Heißgetränk kann nach Abnahme des Frischwasserbehälters 13 sofort verzehrt werden.

Die Filterkammer 20 kann nach dem Brühvorgang vom Anschlußstutzen 19 abgenommen und dann leicht entsorgt und gereinigt werden.

Um das Innere der Filterkammer 20 weitestgehend von der Wirkung der Mikrowellen abzuschirmen, ist es vorteilhaft, die Filterkammer 20 aus Metall oder einem metallhaltigen Kunststoff herzustellen.

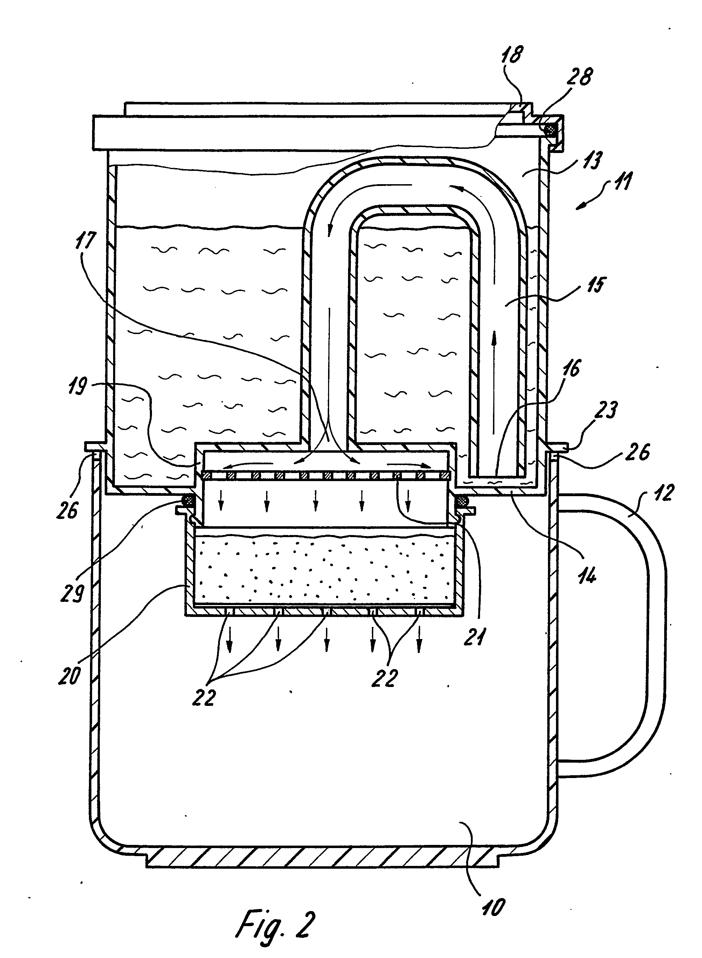

Bei dem in Fig. 2 dargestellten Ausführungsbeispiel der Erfindung sind gleiche Teile mit den gleichen Bezugszeichen wie beim Ausführungsbeispiel in Fig. 1 bezeichnet und auch benannt.

Das Ausführungsbeispiel nach Fig. 2 unterscheidet sich vom Ausführungsbeispiel nach Fig. 1 im wesentlichen dadurch, daß der Frischwasserbehälter 13 luftdicht abgeschlossen ist. Dies wird bewirkt durch eine Dichtung 28 im Bereich des den Frischwasserbehälter 13 verschließenden Deckels 18.

Außerdem ist in diesem Falle die Filterkammer 20 gegenüber dem Stutzen 19 durch einen Dichtring 29 im Umfangsbereich abgedichtet.

Ein weiteres Unterscheidungsmerkmal des Ausführungsbeispieles nach Fig. 2 gegenüber dem Ausführungsbeispiel nach Fig. 1 besteht darin, daß der Aufnahmebehälter 10 be- und entlüftbar ist, was beispielsweise durch entsprechende Be- und Entlüftungsöffnungen 26a im oberen Randbereich des Aufnahmebehälters 10 erreicht werden kann.

Ansonsten ist der Aufbau der Vorrichtung gemäß Fig. 2 identisch mit dem Aufbau der Vorrichtung nach Fig. 1.

Dennoch ergibt sich bei der Vorrichtung gemäß Fig. 2 eine andere, nachfolgend beschriebene Wirkungsweise.

Da der Frischwasserbehälter 13 luftdicht abgeschlossen ist, entsteht im Frischwasserbehälter 10 durch verdampfen des Wasser ein Überdruck, wenn die gesamte Vorrichtung mit gefülltem Frischwasserbehälter 10 in einen Mikrowellenofen gegeben und der Mikrowellenofen eingeschaltet wird.

Dieser entstehende Überdruck bewirkt, daß das erhitzte Wasser durch das saugheberähnliche Überlaufrohr 15 hindurchgedrückt wird. Der größer werdende Raum zwischen dem Wasserspiegel und dem Deckel 18 wird vollständig mit Wasserdampf ausgefüllt, der auch den erforderlichen Druck zum Ausschieben oder zum Herausdrücken des erhitzen Wassers aus dem Frischwasserbehälter 13 liefert.

Das erhitzte Wasser wird aufgrund des im Frischwasserbehälter 13 entstehenden Überdruckkes verhältnismäßig schnell aus dem Frischwasserbehälter 13 herausgedrückt. Der in der Filterkammer 20 befindliche Aromaträger setzt dem ausströmenden Heißwasser einen gewissen Gegendruck entgegen, so daß sich die Filterkammer 20 und der Raum oberhalb dieser Filterkammer im Bereich des Stutzens 19 vollständig mit Wasser füllt. Das heiße Wasser wird gewissermaßen durch den Aromaträger kontinuierlich hindurchgedrückt. Dies ist insbesondere bei der Herstellung von Kaffeegetränken zweckmäßig.

Da aufgrund der Verwendung des saugheberähnlichen Überlaufrohres 15 eine vollständige Entleerung des Frischwasserbehälters 13 praktisch nicht möglich ist, ist im Frischwasserbehälter 13 solange Wasserdampf vorhanden, wie das noch im Frischwasserbehälter befindliche Wasser durch die Einwirkung der Mikrowellen erhitzt wird. Ist das nutzbare Wasservolumen aus dem Frischwasserbehälter 13 herausgedrückt, wird der Mikrowellenofen ausgeschaltet. Nun kühlt der im Frischwasserbehälter 13 befindliche Wasserdampf sehr schnell ab und kondensiert, so daß hier im Frischwasserbehälter 13 ein Unterdruck entsteht. Da in diesem Falle das saugheberähnliche Überlaufrohr 15 nicht mehr mit auslaufendem Wasser gefüllt ist, kann nun aus dem belüftbaren Aufnahmebehälter 10 Luft in den Frischwasserbehälter 13 angesaugt werden, so daß hier wieder ein Druckausgleich auf den Atmosphärendruck stattfindet.

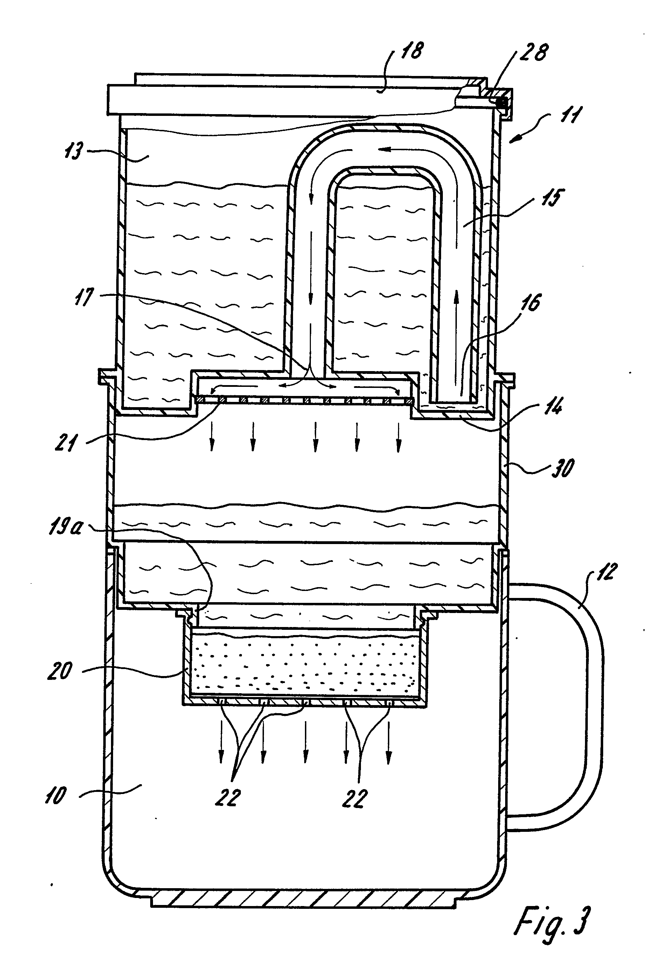

In Fig. 3 ist ein Ausführungsbeispiel dargestellt, welches hinsichtlich seines Funktionsprinzipes dem Ausführungsbeispiel gemäß Fig. 2 entspricht.

Im Unterschied hierzu ist allerdings zwischen dem Aufnahmebehälter 10 und dem Frischwasserbehälter 13 ein Zwischenbehälter 30 vorgesehen. Der Zwischenbehälter 30 ist auf den Aufnahmebehälter 10 aufgesetzt, während der Frischwasserbehälter 13 auf den Zwischenbehälter 30 aufgesetzt ist.

Der Zwischenbehälter 30 ist mit einem Stutzen 19a versehen, an den wiederum eine Filterkammer 20 angeschlossen ist.

Der Frischwasserbehälter 13 ist analog dem Ausführungsbeispiel nach Fig. 2 luftdicht abgeschlossen durch eine Dichtung 28 im Bereich des Deckels 18.

Das Volumen des Zwischenbehälters 13 ist mindestens so groß wie das Fassungsvolumen des Frischwasserbehälters 13.

Beim Ausführungsbeispiel nach Fig. 3 wird das erhitzte Wasser wieder durch den entstehenden Überdruck innerhalb des Frischwasserbehälters 13 durch das saugheberähnliche Überlaufrohr 15 gedrückt. Das austretende Heißwasser wird nun aufgrund der Tatsache, daß der Aromaträger in der Filterkammer 20 ein gleichschnelles Durchfließen verhindert, im Bereich des Zwischenbehälters 30 drucklos gesammelt und kann dann wie beim Herstellen von Aromagetränken im Hand-Filter-Verfahren durch den Aromaträger hindurchfließen.

**Ansprüche**

1. Vorrichtung zur Zubereitung von Heißgetränken in einem Mikrowellenofen mit einem unteren Aufnahmebehälter für das fertige Heißgetränk sowie einem auf den Aufnahmebehälter aufsetzbaren Frischwasserbehälter mit einem Boden und einem Absperrorgan, dessen Ausgangsöffnung im Inneren des Frischwasserbehälters liegt und dessen Auslauföffnung den Boden des Frischwasserbehälters durchtritt, **dadurch gekennzeichnet,** daß das Absperrorgan aus einem saugheberähnlichen Überlaufrohr (15) besteht, daß der Frischwasserbehälter (13) luftdicht abgeschlossen und der Aufnahmebehälter (10) be- und entlüftbar ist.

2. Vorrichtung zur Zubereitung von Heißgetränken in einem Mikrowellenofen mit einem unteren Aufnahmebehälter für das fertige Heißgetränk sowie einem auf den Aufnahmebehälter aufsetzbaren Frischwasserbehälter mit einem Boden und einem Absperrorgan, dessen Ausgangsöffnung im Inneren des Frischwasserbehälters liegt und dessen Auslauföffnung den Boden des Frischwasserbehälters durchtritt, dadurch gekennzeichnet, daß das Absperrorgan aus einem saugheberähnlichen Überlaufrohr (15) besteht, daß im Boden (14) des belüftbaren Frischwasserbehälters (13) außerhalb des Bereiches der Auslauföffnung (17) mindestens eine Tropföffnung (27) vorgesehen und der Aufnahmebehälter (10) im Auflagebereich des Frischwasserbehälters (13) bis auf mindestens ein im Bereich seines oberen Randes (24) vorgesehenes, einseitig wirkendes Entlüftungsventil (26) luftdicht verschlossen ist.

3. Vorrichtung nach Anspruch 1, dadurch gekennzeichnet, daß die Auslauföffnung (17) in einen über den Boden (14) nach unten vorstehenden Anschlußstutzen (19) einmündet und daß am Anschlußstutzen (19) eine Filterkammer (20) lösbar angeschlossen ist, wobei die Filterkammer (20) im Anschlußbereich zum Stutzen (19) durch einen umlaufenden Dichtring (29) abgedichtet ist.

4. Vorrichtung nach Anspruch 2, dadurch gekennzeichnet, daß die Auslauföffnung (17) in einen über den Boden (14) nach unten vorstehenden Anschlußstutzen (19) einmündet und daß am Anschlußstutzen (19) eine Filterkammer (20) lösbar angeschlossen ist.

5. Vorrichtung nach Anspruch 1, dadurch gekennzeichnet, daß im Bereich des oberen Randes (24) des Aufnahmebehälters (10) und dem darauf abgestützten Frischwasserbehälter (13) mindestens eine Be- und Entlüftungsöffnung (26a) vorgesehen ist.

6. Vorrichtung nach einem oder mehreren der Ansprüche 1 bis 5, dadurch gekennzeichnet, daß unterhalb der Auslauföffnung (17) des Überlaufrohres (15) und oberhalb der Filterkammer (20) ein Wasserverteilungssieb (21) angeordnet ist.

7. Vorrichtung nach einem oder mehreren der Ansprüche 1 bis 6, dadurch gekennzeichnet, daß die Filterkammer (20) aus Metall oder einem metallhaltigen Kunststoff hergestellt ist.

8. Vorrichtung nach Anspruch 1, dadurch gekennzeichnet, daß der Frischwasserbehälter (13) durch einen im Bereich eines Deckels (18) angeordnete, umlaufende Dichtung (28) luftdicht verschließbar ist.

9. Vorrichtung nach Anspruch 1 oder 2, dadurch gekennzeichnet, daß zwischen dem Frischwasserbehälter (13) und dem Aufnahmebehälter (10) ein Zwischenbehälter (30) angeordnet ist, wobei das Fassungsvolumen des Zwischenbehälters (30) mindestens dem Volumen des Frischwasserbehälters (13) entspricht.

10. Vorrichtung nach Anspruch 9, dadurch gekennzeichnet, daß der Zwischenbehälter (30) mit einem Stutzen (19a) ausgestattet ist, an dem eine Filterkammer (20) lösbar befestigt ist.

11. Vorrichtung nach einem oder mehreren der Ansprüche 1 bis 10, dadurch gekennzeichnet, daß der Frischwasserbehälter (13) formschlüssig auf den Aufnahmebehälter (10) aufsetzbar ist.

12. Vorrichtung nach einem oder mehreren der Ansprüche 1 bis 11, dadurch gekennzeichnet, daß der Aufnahmebehälter (10) als Kanne mit einem Handgriff (12) ausgebildet ist.

Fig. 1

Melitta

Fig. 2

*Fig. 3*

Melitta

## EINSCHLÄGIGE DOKUMENTE

EP 90103660.8

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| D,A | DE - A1 - 2 829 567 (RAYTHEON) * Ansprüche; Fig. 1-4 * | 1,2,5, 11,12 | A 47 J 31/043 H 05 B 6/80 |
| A | WO - A1 - 89/09 011 (ALADDIN) * Zusammenfassung; Seite 2, Zeile 30 - Seite 3, Zeile 38; Fig. 1 * | 1,2,5, 12 | |
| A | US - A - 4 577 080 (GROSSMANN) * Zusammenfassung; Fig. 4 * | 1,2, 11,12 | |
| A | US - A - 4 381 696 (KORAL) * Zusammenfassung; Ansprüche; Fig. 1 * | 1,2, 11,12 | |
| A | DE - A1 - 3 206 803 (RAYTHEON) * Zusammenfassung; Fig. 1, 2 * | 1,2, 11,12 | RECHERCHIERTE SACHGEBIETE (Int. Cl.⁵) A 47 J 31/00 F 24 C 7/00 H 05 B 1/00 H 05 B 6/00 |

Der vorliegende Recherchenbericht wurde für alle Patentansprüche erstellt.

| Recherchenort | Abschlußdatum der Recherche | Prüfer |
|---|---|---|
| WIEN | 29-06-1990 | TSILIDIS |